Europäisches Patentamt

(19) European Patent Office    (11) Publication number:    **0 053 202**

Office européen des brevets                            **B1**


(12)                    **EUROPEAN PATENT SPECIFICATION**


(45) Date of publication of patent specification: **27.03.85**    (51) Int. Cl.⁴: **H 04 B 3/23**

(21) Application number: **80107690.2**

(22) Date of filing: **06.12.80**

(54) Improved double talk detector for echo cancellers.

(43) Date of publication of application:
**09.06.82 Bulletin 82/23**

(45) Publication of the grant of the patent:
**27.03.85 Bulletin 85/13**

(84) Designated Contracting States:
**DE FR GB IT**

(56) References cited:
**US-A-3 894 200**
**US-A-4 005 277**
**US-A-4 024 358**
**US-A-4 029 912**

**PROCEEDINGS OF THE IEEE, vol. 65, no. 3,**
**March 1977, New York, USA, N. DEMYTKO**
**AND K. ENGLISH "Echo cancellation of time-**
**variant circuits", pages 444-453**

(73) Proprietor: **COMMUNICATIONS SATELLITE**
**CORPORATION**
**950 L'Enfant Plaza, S.W.**
**Washington, D.C. 20024 (US)**

(72) Inventor: **Horna, Otakar Anthony**
**5017 Del Ray Avenue**
**Bethesda Maryland (US)**

(74) Representative: **Jacobacci, Filippo et al**
**c/o JACOBACCI-CASETTA & PERANI S.n.c. Via**
**Alfieri, 17**
**I-10121 Torino (IT)**

## Description

Background of the invention

The present invention relates to adaptive echo cancellation circuits.

More specifically the invention relates to methods and circuits for echo cancellation of the type defined in the preamble of appended claims 1, 10, 15, 16 and 21.

Echo cancellation circuits which are well known in the telephone communications environment usually employ a form of adaptive finite impulse response digital filter. In a typical system the echo suppression apparatus at the near subscriber functions to disable the outgoing path from that subscriber when signals from the far end subscriber appear on the incoming path. Echoes due to incoming signals on the receive path are, therefore, prevented from returning to the far end subscriber over the outgoing path. Double talking refers to the condition when the near end subscriber breaks in and both subscribers are talking simultaneously. Prior art echo suppressors include double talk detectors which distinguish between speech signals generated on the outgoing path by the near end subscriber (double talk signals) and echo signals returning on the outgoing path due to the far end subscriber speech signals on the incoming path. If the outgoing path signal exceeds the incoming path signal it is assumed that the near end subscriber is transmitting and the echo suppression is disabled. When the opposite condition occurs it is assumed that the near end subscriber is not transmitting and the echo is suppressed.

US—8A—3 894 200 discloses an adaptive echo canceller with digital center clipping, in which a differential amplifier controls the by-pass of the center clipper in certain situations to avoid distortion. Ordinarily, in this known circuit, the center clipper is in the signal path. During double talk conditions, the low level residual echo signal at the output of said differential amplifier results in the by-pass passing the entire output of the differential amplifier without clipping.

US—A—3 973 086, US—A—3 992 594 and US—A—4 029 912 discuss the problem of distinguishing between an echo and double talk. The above systems work by initially providing an approximated echo using a pair of storage memories, one following decreasing magnitude signals to give an output corresponding to the anticipated (or worst case) echo and delay, while the other member is used to approximate echo as long as its output is less than the output of the first memory. Otherwise, the first memory is used for the echo approximation. The second memory follows increasing magnitude signals, less a certain transmission loss, and holds the value of the last signal peak while the signal magnitude is decreasing. These approximations are compared with the actual signals on the echo return path. Double talk detection by this method is evidenced in all three of the abovementioned patents. This method is different than that of the subject disclosure in which a third detector is used to control the signal path through the other detectors during initial adaptive filtering when the residual echo is less than the true echo.

US—A—4 005 277 describes an echo controller comprising a mode switch for switching an echo suppressor and canceller. This switch normally supplies the echo cancelled signal to the outgoing path and further evaluates characteristics of the echo path and operation of the echo canceller to substitute the echo suppressed signal for the echo cancelled signal only when the path characteristics are questionable. The mode switch thus monitors the double talk and carries out the switching between the echo cancelled and suppressed signals in the absence of double talk.

Other patents (US—A—4 012 603, US—A—3 787 645) discuss various aspects of this type of double talk detection system.

A "Twelve-Channel Digital Echo Canceller" which uses a digital filter and a center clipper is described by D. Duttweiler in *IEEE Transactions on Communications*, Vol. Com-26, No. 5, May 1978, pages 647 to 653.

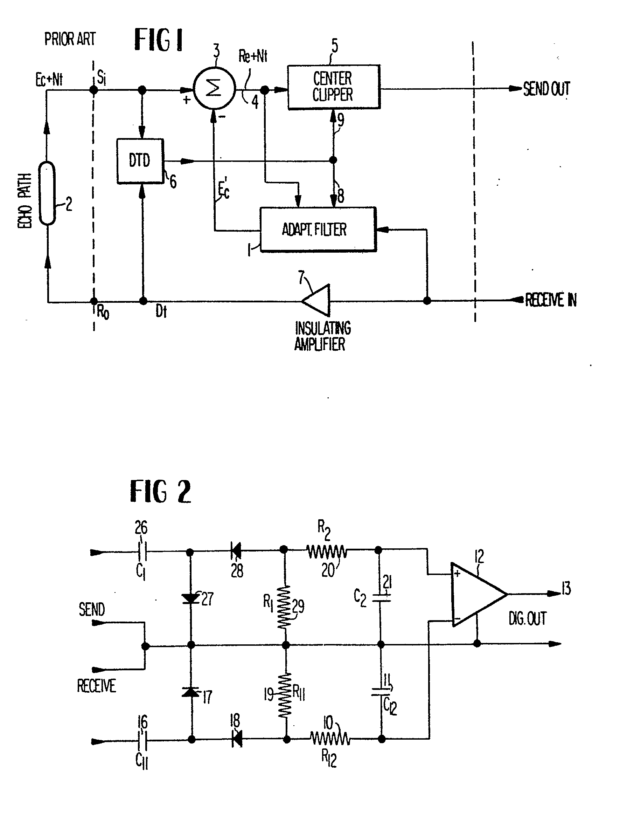

The prior art, such as that discussed above, is further illustrated in Figure 1, which shows an echo canceller circuit at the near talker location. A received signal from the distant talker Dt is passed through insulating amplifier 7 to the receiver output Ro. Path 2 represents the arbitrary path taken by the received signal causing an echo thereof to be fed back into the transmitting portion of near talker equipment. The echo signal Ec is similar to the signal Dt but attenuated by the propagating medium 2.

The use of adaptive filter 1 for echo cancellation in long distance telephone circuits is well known and described in detail by S. J. Campanella et al, "Analysis of an Adaptive Impulse Response Echo Canceller", Comsat Technical Review, Vol. 2, No. 1, Spring 1972, pp. 1—36, and by O. A. Horna, "Echo Canceller Utilizing Pseudo Logarithmic Coating", NTC 1977 Conference Record, Vol. 1, pp. 04:7-1 through 04:7-8. Such adaptive filters compute an estimate E'c of the true echo signal Ec and apply it to subtractor circuit 3. After an initial adaptive period, the proper transfer characteristic is developed in filter 1 and only a small residual echo signal Re remains at the output subtractor 3. The residual Re is then easily suppressed by a non-linear center clipper circuit 5.

Both adaptive filter 1 and center clipper 5 may remain in an active state as long as desired to effect cancellation of the echo signal Ec. However, in the event that the near talker breaks into the conversation, a "double talk" condition occurs. Both the echo Ec and the near talker speech Nt appear at the input to the transmitting portion of the near talker equipment. Under these conditions, two changes must take place: (1) the adaptation process of the filter 1 must be "frozen" so that it will not be contaminated by the uncorrelated near talker signal Nt and (2) the center clipper 5 must be disabled in order not to distort the near talker speech. The residual echo signal Re, being much smaller than Nt is completely masked by the speed signal.

The function of the circuit in Figure 1 is based on the assumption that during double talk, the volume of near talker speech Nt is higher than the volume of the echo, i.e., Nt is greater than Ec. The tripping point of double talk detector 6 can be adjusted to indicate a double talk condition when,

$$Si=Ec+Nt>0.5 \ Dt.$$

Detector 6 under these conditions disables the center clipper 5 and the correction loop of filter 1 over lines 9 and 8, respectively.

Certain conditions will degrade performance of the latter echo cancellation circuit. One such condition, known as false double talk, can occur when the distant speaker pauses. The echo, delayed due to the propagation delays inherent in path 2 will be greater than 0.5 Dt thereby causing the double talk detector to falsely indicate a double talk condition. Center clipper 5 will be turned off resulting in a burst of residual echo Re on the send-out line.

The opposite situation exists when the near talker speech is of a lower amplitude than the echo signal. This can occur in low quality, long two-wire circuits. In this case, detector 6 is unable to detect the double talk condition and the impulse response of filter 1 is contamined and the center clipper distorts the speech signal Nt.

## Summary of the invention

According to the invention the degradation of the echo canceller performance as described above is avoided by the echo cancellation circuits and methods characterised in the appended claims 1, 10, 15, 16 and 21.

Thus, as it will be apparent from the following description, a first double talk detector is provided to measure the signal transmitted by the near talker station, which signal includes near talker speech (when present) and the echo signal. The first double talk detector compares this signal with the signal received from the distant talker station. A second double talk detector is provided to measure a signal comprising the near talker speech (when present) and the residual echo remaining after the subtraction of the synthesized echo signal produced by the adaptive filter from the true echo signal. Double talk detector 2 compares this composite signal to the signal received from the distant talker station.

A third double talk detector is provided to compare the composite signal comprising the near talker speech (when present) and the echo signal with a second composite signal comprising the near talker speech and the residual echo signal. The third double talk detector functions to determine the extent of the initial adaptive period, that is, the period of time it takes for the adaptive filter to drive the residual echo signal to an arbitrarily small value. The third double talk detector also determines the presence of a false double talk condition.

The outputs of each of the double talk detectors are logically combined to effect control of the adaptive filter and the center clipper. The combinatorial logic specifically provides for effective control of the filter and clipper by the first double talk detector during the initial adaptive period as determined by the third double talk detector. Control is subsequently switched to the second double talk detector upon the transition from the initial adaptive period to a steady state condition where the adaptive filter is producing an accurate estimated echo signal. The third double talk detector furthermore oversees the operation of the second double talk detector to insure that the second double talk detector does not respond to a false double talk condition.

## Brief description of the drawings

Figure 1 is a block diagram of a prior art echo cancellation circuit.

Figure 2 is a schematic diagram illustrating a double talk detection circuit which can be used in a preferred embodiment of the present invention.

Figure 3 is a block diagram of a preferred embodiment of the present invention.

## Detailed description of the preferred embodiments

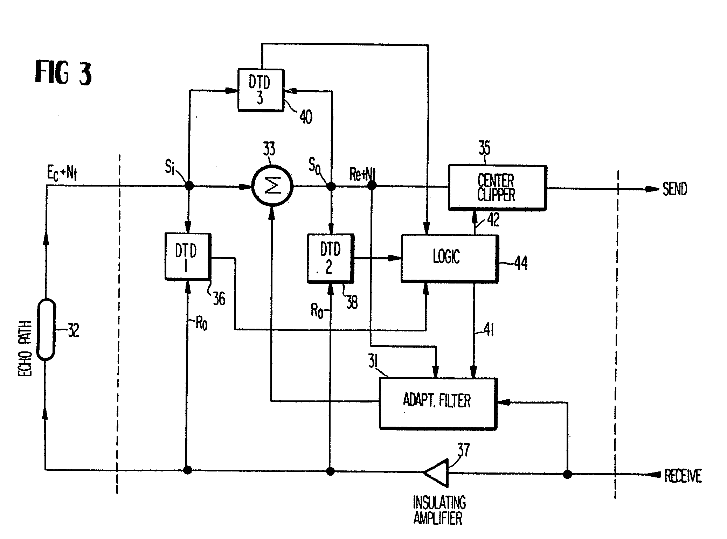

A preferred embodiment of the invention, as shown in Figure 3, includes adaptive filter 31 and center clipper 35 to cancel the echo signal in a manner similar to the circuit of Figure 1. Control of the filter and clipper, however, is fundamentally different than the Figure 1 system.

The incoming signal from a distant talker is received on the receive line and applied to adaptive filter 31 and insulating amplifier 37. The output signal, Ro from amplifier 37 is applied to first and second double talk detectors 36 and 38. The echo path 32 represents an arbitrary path taken by the signal Ro which causes it to be fed back into the transmitting portion of the near talker equipment. The echo signal Ec (echo) is similar to the signal Ro but attenuated by the propagating medium 32. The signal Ec is combined with any signal from the near talker (Nt) to produce signal input Si as shown. The signal Si is applied to each of first and third double talk detectors 36 and 40, respectively, as well as to subtractor means 33. The adaptive filter 31 provides the second input to subtractor 33 so that the replica of the signal Ec, generated by the adaptive filter can be subtracted from the signal Si to produce the output signal So which comprises the residual echo signal Re plus the near talker signal Nt. The signal So is applied to the filter 31 to complete the servo loop of the adaptation process of the filter 31. The signal So is also applied to second and third double talk

3

detectors 38 and 40, respectively, as well as to center clipper 35. The outputs of each of the detectors 36, 38 and 40 are applied to logic means 44. Under the control of the three detectors, logic 44 provides control outputs 41 and 42 to adaptive filter 31 and to center clipper 35 in order to selectively enable or disable the adaptive filter 31 and the clipper 35.

One particular type of double talk detection circuit which may be utilized in the present invention is shown in Figure 2. The two signals are coupled by capacitors 16 and 26 to double diode detectors 17, 18 and 27 and 28, and filtered by lowpass RC filters 10 and 11, and 20 and 21. The time constant is determined by resistors 19 and 29. The d.c. voltages across capacitors 11 and 21 are compared in a comparator 12 and its output 13 indicates in binary form which of the two inputs is higher. It should be noted that the Figure 2 circuit is merely illustrative of a particular type of detection circuit which can be used in the system shown in Figure 3. Other detector circuits which function to determine the relative average or RMS signal value over a given time can be readily adapted for use in the echo cancellation circuit.

The triggering point of each of the detectors 36, 38, and 40 is adjusted to detect a particular condition. Specifically, the detectors can be provided with a well-known biasing arrangement at comparator 12 to detect and trigger on the following conditions:

DTD 1: $Ro < 2Si$ (Similar to prior art detector 6)

DTD 2: $Ro < 4So$

DTD 3: $Si > 5So$

These particular choices of coefficients (2, 4 and 5) are merely exemplary. The coefficients which can be employed will always be a matter of design choice based on system noise, desired sensitivity and other considerations which will become apparent from the description of the system operation below.

The operation of the system will be described by showing how the present invention overcomes the problems associated with the prior art system of Figure 1. As mentioned above, a condition (Condition D, Table I below) which causes degradation of the prior art system occurs when the near talker signal Nt is of a lower amplitude than the echo signal Ec, as can occur when low quality transmission lines are used, or where the near talker is talking very softly. When this condition occurs, DTD 1 will not trigger even when the near talker is speaking since Nt is of a very low amplitude. As a result, and as discussed with regard to Figure 1, above the detector fails to detect a true double talk condition.

The present system, however, provides a second detector, DTD 2, which avoids this problem. The latter detector compares Ro with So. After the initial adaptation period of filter 31, Re will be extremely small and therefore, when near talker speech is present, So will be substantially the same as Nt. This being the case, the detector can be adjusted to trigger when So approaches a small fraction of Ro, i.e. $Ro < 4So$. In this manner, detector 38 will detect the presence of signal Nt even when it is of low amplitude due to the near talker's low voice or less than perfect transmission conditions. Detector 38 will accordingly control clipper 35 and adaptive loop of filter 31 in order not to distort the near talker's transmission or contaminate the adaptive loop.

The above-described detection in DTD 2 of a true double talk condition when Nt is very weak is only effective, however, after the signal Re is driven to a very low value by the adaptive loop in filter 31 ("full adaptation"). In the initial adaptive period before the filter can fully adapt, the signal Re will typically be sufficiently large so as to trigger DTD 2 even in the absence of a near talker signal Nt. To avoid false control of filter 31 and clipper 35 by DTD 2 during this adaptive period, the logic 44 operates to exclude DTD 2 from control during this period. Instead control is by DTD 1, which operates in a manner similar to the detector 6 in the system of Figure 1.

The third detector, DTD 3, provides an indication of when the filter 31 has fully adapted to the echo signal. The condition of full adaptation (the converse of the initial adaptive period) is defined as the condition where the filter 31 is producing an accurate estimate of the echo signal Ec so as to drive the residual echo Re to an arbitrarily small value. In the example described above, this condition is deemed to occur when $Si > 5So$. Again, this particular condition is merely exemplary and it should be understood that the condition used to determine the trigger point of each of the three detectors is a matter of choice. The detector, DTD 3, therefore, generally indicates whether or not the system is in the initial or fully adaptive period in order to shift the control of the clipping and filter from DTD 1 to DTD 2. Specific combinations of outputs from DTD 1, DTD 2 and DTD 3 which lead to the various control outputs from logic means 44, will be discussed below.

A further function of the echo canceller is to overcome the second abovementioned shortcoming of the prior art systems, specifically, the "false double talk" condition. In the situation where the near talker is silent and the distant talker has been speaking but momentarily pauses in speech (Condition E, Table I), the pause in the distant talker speech will, in effect, propagate through insulating amplifier 37, through echo path 32, and back into the near talker's send circuit. As the distant talker's pause in speech propagates through the receive line of the near talker circuit, but before it has propagated through echo path 32 to send side of near talker's circuit, the situation exists where the signal Ro at the input of detector 38 will be zero but the signal Si will have a small, but finite, value even in the absence of Nt. This condition would trigger DTD 2 causing a false indication of double talk. In order to avoid the latter, DTD 3 discriminates between the true and false double talk conditions. The residual echo Re will be much less than Ec after the initial adaptive period. Thus, when the near talker is silent (Nt=0) DTD 3 will be triggered to its second state because the signals will satisfy the condition $Si>5So$. On the other hand, when near talker speech is present (true double talk), the signal Nt is the major portion of Si and So, the condition $Si>5So$ will no longer be satisfied and DTD 3 will revert to its first state. The combination of outputs from DTD 2 and DTD 3 can therefore generally distinguish between a true and false double talk condition.

In response to the detected false double talk, the clipper will be maintained in an enabled state so that a burst of residual echo on the send-out line will not occur. In the preferred embodiment of the invention, however, the adaptive loop of filter 31 is disabled since, by definition, there is a "pause" or lack of any signal on the receive line during false double talk. Since the lack of signal is not indicative of the quality of the far talker speech, the loop is disabled so that the adaptation process is not contaminated by the pause.

Another situation (Condition F, Table I) where selective control of the clipper and filter can be employed is where there is double talk in the fully adapted period with short breaks in the near talker speech. Since a center clipper such as clipper 35 may typically be analog in nature as opposed to filter 31 which may be digital, it is apparent that the analog clipper will not react as quickly as the digital filter to an enable/disable command. If this is the case, logic 44 can be designed to maintain the clipper 35 in a disabled state during double talk when there are very short breaks in the near talker speech, while filter 31 can be made to react to the short breaks so that it is enabled during the breaks in order to resume the adaptation process based on the far talker signal. Detector 36 is provided with a relatively long release time constant for the purpose of detecting this particular condition. The clipper will remain under the control of detector 36 and will not react to the short breaks in speech due to the long time constant. Filter 31, on the other hand, reacts to detectors 38 and 40 which have relatively fast time constants to thereby enable it to react to the short breaks in speech.

It should be noted that the above situation is merely illustrative and that either an analog or digital filter and clipper can be used in any desired combination as a matter of design choice. The necessary changes to the functions performed by logic 44 can be determined through subjective testing of the canceller in an operational environment.

The existence of any of the above described conditions is determined in combinatorial logic means 44 which receives inputs from each of the detectors 36, 38, and 40. Table I is an example of one particular logic scheme to combine the outputs of the three detectors to effect the control of the filter loop and the clipper in accordance with the various conditions described above. It should be noted that modifications of the logic to effect slightly different control of the filter and clipper for different system characteristics and requirements can obviously be made by those of ordinary skill in the art.

TABLE I

| Condition | DTD 1 (T1) (long τ) | DTD 2 (T2) | DTD 3 (T3) | Filter 0= disable | Clipper 0= disable |
|---|---|---|---|---|---|
| A. Initial adaptive Period far end talk only (no double talk) | Ro>2Si 1 | Ro<4So 0 | Si<5So 0 | 1 | 1 |
| B. Full adaptation far end talk only (no double talk) | Ro>2Si 1 | Ro>4So 1 | Si>5So 1 | 1 | 1 |
| C. Initial or full adaptation near end talker (normal double talk) | Ro<2Si 0 | Ro<4So 0 | Si<5So 0 | 0 | 0 |
| D. Full adaptation —double talk with soft near end talker or bad transmission lines | Ro>2Si 1 | Ro>4So 1 | Si<5So 0 | 0 | 0 |
| E. Full adaptation with pause in far talker speech and no near talker speech (false double talk) | Ro<2Si 0 | Ro<4So 0 | Si>5So 1 | 0 | 1 |
| F. Full adaptation, double talk with short breaks in near talker speech | Ro<2Si 0 | Ro>4So 1 | Si>5So 1 | 1 | 0 |

Table I tabulates the six conditions which may be expected to occur in voice communications systems. Condition A indicates the initial adaptive period with far-end talk only. DTD 1 indicates that Ro>2Si to define the condition T1=1. DTD 2 detects Ro<4So to indicate the condition T2=0. DTD 3 detects Si<5So to indicate that T3=0. Each of the conditions T1=1, T2=0 and T3=0 are delivered to logic means 44. In response to the three inputs, the clipper and the adaptive loop of the filter are enabled by the logic. Condition B is detected when T1=1, T2=1 and T3=1. Under this condition (full adaptation, far end talk only), logic 44 enables both the filter loop and the clipper. Condition C (normal double talk) is detected when T1=0, and T2=0, and T3=0. Logic 44 responds to condition C by disabling both the filter loop and the clipper. Condition D indicates that there is double talk in the adaptive period but the near talker signal is weak. The detectors provide signals T1=1, T2=1 and T3=0 to the logic which in turn disables both the clipper and filter loop. Condition E where T1=0, T2=0 and T3=1, indicates a false double talk condition. Logic 44 disable the filter loop but enables the clipper in response thereto. Finally, Condition F indicates full double talk with short breaks in Nt by providing T1=0, T2=1 and T3=1 to the logic. The filter loop is accordingly enabled during the breaks in Nt but the clipper is disabled.

Logic 44 can be designed around the scheme shown in Table I by constructing Table II as follows:

**0 053 202**

### TABLE II

| Condition | T1 | T2 | T3 | Filter | Clipper |
|-----------|----|----|----|--------|---------|
| C | 0 | 0 | 0 | 0 | 0 |
| E | 0 | 0 | 1 | 0 | 1 |
| X | 0 | 1 | 0 | X | X |
| F | 0 | 1 | 1 | 1 | 0 |
| A | 1 | 0 | 0 | 1 | 1 |
| X | 1 | 0 | 1 | X | X |
| D | 1 | 1 | 0 | 0 | 0 |
| B | 1 | 1 | 1 | 1 | 1 |

The "don't care" conditions indicated by X are used to show conditions which are not anticipated to occur in the system for which the cancellation circuit is designed. The particular "don't care" conditions in Table II are indicated for the system described above in accordance with the scheme of present invention using Table I.

Karnaugh maps for the filter and clipper are shown in Table III in order to reduce the logic required to generate the enable/disable signals.

### TABLE III
#### Filter

| T3 | T1<br>T2 00 | 01 | 11 | 10 |
|----|-------------|----|----|----|
| 0 |  | X |  | 1 |
| 1 |  | 1 | 1 | X |

#### Clipper

| T3 | T1<br>T2 00 | 01 | 11 | 10 |
|----|-------------|----|----|----|
| 0 |  | X |  | 1 |
| 1 | 1 |  | 1 | X |

The maps in Table III reduce the required logic as follows:

Filter: $T2\_T3+T1\ \overline{T2}$=Enable
Clipper: $\overline{T2}\ T3+T1\ (\overline{T2}+T3)$=Enable

The logic 44 can be implemented by standard AND/OR or NAND gates, or alternatively by a ROM having a look-up table programmed to provide the two logical functions shown above.

Thus it is seen that the combination of detectors 36, 38 and 40 and logic means 44 effects double talk control of the filter and clipper during the initial adaptive period (Conditions A or C) by using detector 36. After the filter has fully adapted to the echo signal, however, as determined by detector 38, control is effectively shifted to the more sensitive detector 38 (Condition D, for example). The combination logic further provides detection of particular conditions to ensure that the system does not react to a "false double talk" condition (Condition E) or a rapidly changing double talk condition (Condition F) by monitoring the outputs of each of the detectors 36, 38 and 40.

**Claims**

1. In an echo cancellation circuit having a reception line for providing a distant party signal ($R_o$) received from a distant party; a transmit line having a near party signal from a near party and an echo

7

0 053 202

signal applied thereto for providing a composite signal ($S_i$); a filter (31) having an adaption process having enabled and disabled states for receiving said distant party signal ($R_o$) at a filter input and producing a signal which estimates said echo signal, said estimated signal being produced after an initial adaptive period; subtraction means (33) for subtracting said estimated signal from said composite signal ($S_i$) to produce an intermediate signal ($S_o$) along said transmission line; signal suppression means (35) having enabled and disabled states for receiving said intermediate signal ($S_o$) and for producing a transmitted signal; the method of selectively enabling and disabling said adaptation process and suppression means (35) by generating a first quantitative signal when a first relationship exists between said distant party signal ($R_o$) and said composite signal ($S_i$), characterised by the fact that it further comprises the steps of:

(a) generating a second signal when a second quantitative relationship exists between said distant party signal ($R_o$) and said intermediate signal ($S_o$);

(b) generating a third signal when a third quantitative relationship exists between said composite signal ($S_i$) and said intermediate signal ($S_o$); and

(c) selectively disabling and enabling said filter adaptation process and said suppression means (35) in accordance with predetermined combinations of said first, second and third signals.

2. The method of claim 1 wherein:

(a) said first signal is generated only when the ratio of said distant party signal ($R_o$) to said composite signal ($S_i$) is greater than a first predetermined ratio;

(b) said second signal is generated only when the ratio of said distant party signal ($R_o$) to said intermediate signal ($S_o$) is greater than a second predetermined ratio;

(c) said third signal is generated only when the ratio of said composite signal ($S_i$) to said intermediate signal ($S_o$) is greater than a third predetermined ratio; and

(d) the second and third predetermined ratios being larger than said first predetermined ratio.

3. The method of claim 2 where said adaptation process and said suppression means (35) are enabled when said first signal is generated while said second and third signals are not generated (Condition A).

4. The method of claim 2 wherein said adaptation process and said suppression means (35) are enabled when all of said first, second and third signals are generated (Condition B).

5. The method of claim 2 wherein said adaptation process and said suppression means (35) are disabled when none of said first, second, and third signals are generated (Condition C).

6. The method of claim 2 wherein said adaptation process and said suppression means (35) are disabled when only said first and second signals are generated (Condition D).

7. The method of claim 2 wherein said adaptation process is disabled and said suppression means (35) are enabled when only said third signals are generated (Condition E).

8. The method of claim 2 wherein said adaptation process is enabled and said suppression means (35) are disabled when only said second and third signals are generated (Condition F).

9. The method of claim 2 wherein said third predetermined ratio is larger than said second predetermined ratio.

10. An echo cancellation circuit having a reception line for providing a distant party signal ($R_o$) received from a distant party; a transmit line having a near party signal from a near party and an echo signal applied thereto for providing a composite signal ($S_i$); a filter (31) for receiving said distant party signal ($R_o$) at a filter input and producing a signal which estimates said echo signal, said estimated signal being produced after an initial adaptive period; subtraction means (33) for subtracting said estimated signal from said composite signal ($S_i$) to produce an intermediate signal ($S_o$) along said transmission line; signal suppression means (35) for receiving said intermediate signal ($S_o$) and for producing a transmitted signal; a first detector (36) receiving said distant party signal ($R_o$) and said composite signal ($S_i$) and providing a first output signal when a first predetermined quantitative relationship exists between said distant party signal ($R_o$) and said composite signal ($S_i$), said echo cancellation circuit being characterized by the fact that it further comprises a second detector (38) receiving said distant party signal ($R_o$) and said intermediate signal ($S_o$) and providing a second output signal when a second predetermined quantitative relationship exists between said distant party signal ($R_o$) and said intermediate signal ($S_o$); a third detector (40) receiving said composite signal ($S_i$) and said intermediate signal ($S_o$) and providing a third output signal when a third predetermined quantitative relationship exists between said composite signal ($S_i$) and said intermediate signal ($S_o$); and logic means (44) receiving output signals from each of said first, second and third detectors (36; 38; 40), wherein said logic means (44) selectively enables and disables said filter means (31) and suppression means (35) under the control of said first, second and third detector output signals.

11. The echo cancellation circuit of claim 10 wherein said logic means (44) enables said suppression means (35) when a pause in the receive signal occurs concurrently with an absence of said near party signal.

12. The echo cancellation circuit of claim 10 wherein said filter means (31) comprises an adaptive filter wherein said control thereof by said logic means (44) selectively allows said adaptive filter on the one hand to adapt to produce an updated version of said estimated echo signal, and on the other hand to freeze said adaptive filter to maintain the characteristics of said adaptive filter constant.

13. The echo cancellation circuit of claims 10 or 12 wherein said signal suppression means (35) comprises a center clipper wherein said control thereof by said logic means (44) selectively turns on said clipper on the one hand and on the other hand turns said clipper off.

8

0 053 202

14. The echo cancellation circuit of claim 10 wherein said logic means (44) disables said filter means (31) and said suppression means (35) when said near party is talking but said near party signal is of a lower amplitude than said echo signal.

15. An echo cancellation circuit having a receive line for receiving a distant party signal ($R_o$) received from a distant party, a transmit line having a near party signal from a near party and an echo signal applied thereto for providing a composite signal ($S_i$), a filter (31) having a filter input for receiving said distant party signal ($R_o$) and having a selectively enabled and disabled adaptive process for producing a signal which estimates said echo signal, said estimated signal being produced after an initial adaptive period, subtraction means (33) for subtracting said estimated signal from said composite signal ($S_i$) to produce an intermediate signal ($S_o$) along said transmission line, signal suppression means (35) having selectively enabled and disabled states for receiving said intermediate signal ($S_o$) and for producing a transmitted signal, first double talk detection means (36) for generating a first control output signal when a first quantitative relationship exists between said distant and near party signals;

said echo cancellation circuit being characterized by:

first means (46) for generating an output signal indicating whether or not said initial adaptive period is ended;

second double talk detection means (38) for generating a second control output signal when a second quantitative relationship exists between said intermediate and distant party signals ($S_o$; $R_o$); and

control means (44) responsive to said first means output signal and to said first and second control output signals for controlling the enablement and disablement of said signal suppression means (35) and said filter means (31) in accordance with said first control signal during said initial adaptive period of said filter means (31) and for controlling the enablement and disablement of said signal suppression means (35) and said filter means (31) in accordance with said second control output signal after said initial adaptive period.

16. An echo cancellation circuit having a reception line for providing a distant party signal ($R_o$) received from a distant party; a transmit line having a near party signal from a near party and an echo signal applied thereto for providing a composite signal ($S_i$); a filter (31) for receiving said distant party signal ($R_o$) at a filter input and producing a signal which estimates said echo signal, said estimated signal being produced after an initial adaptive period;

subtraction means (33) for subtracting said estimated signal from said composite signal ($S_i$) to produce an intermediate signal ($S_o$) along said transmission line; signal suppression means (35) for receiving said intermediate signal ($S_o$) and for producing a transmitted signal; a first detector (36) for generating a first detection signal in response to the existence of a first quantitative relationship between said distant and near party signals; and first means (44) for enabling and disabling at least one of said filters (31) and signal suppression means (35) in response to said first detection signal; said echo cancellation circuit being characterized by:

means (40) for determining the end of said initial adaptive period; and

a second detector (38) for generating a second detection signal in response to the existence of a second quantitative relationship between said intermediate signal ($S_o$) and said distant party signal ($R_o$), said first means (44) disabling at least one of said filter (31) and said signal suppression means (35) in response to said second detection signal only after the end of said initial adaptive period is determined.

17. The echo cancellation circuit of claim 16 further comprising a third detector (40) for generating a third detection signal indicating the end of said initial adaptive period.

18. The echo cancellation circuit of claim 17 wherein said third detector (40) generates said third detection signal in response to the existence of a third quantitative relationship between said composite signal ($S_i$) and said intermediate signal ($S_o$).

19. The echo cancellation circuit of claim 18 wherein at least one of said filter (31) and said signal suppression means (35) is enabled or disabled in accordance with said second detection signal only during the generation of said third detection signal.

20. The echo cancellation circuit of claim 16 wherein first means (44) said filter (31) enables when said first detector (36) indicates that the ratio of said distant party signal ($R_o$) to said composite signal ($S_i$) is greater than a first predetermined ratio and said second detector (38) indicates that the ratio of said distant party signal ($R_o$) to said intermediate signal ($S_o$) is less than a second predetermined ratio.

21. In an echo cancellation circuit having a reception line for providing a distant party signal ($R_o$) received from a distant party, a transmit line having a near party signal from a near party and an echo signal applied thereto for providing a composite signal ($S_i$), a filter (31) for receiving said distant party signal ($R_o$) at a filter input and producing a signal which estimates said echo signal, said estimated signal being produced after an initial adaptive period, subtraction means (33) for subtracting said estimated signal from said composite signal ($S_i$) to produce an intermediate signal ($S_o$) along said transmission line, and signal suppression means (35) for receiving said intermediate signal ($S_o$) and for producing a transmitted signal, a method of controlling said echo cancellation circuit, said method being of the type comprising the steps of generating a first comparison signal in accordance with the comparison of said composite signal ($S_i$) to said distant party signal ($R_o$), said method being characterized by the fact that it further comprises:

generating a second comparison signal in accordance with the comparison of said intermediate signal ($S_o$) and said distant party signal ($R_o$); and

9

**0 053 202**

selectively controlling at least one of said filter (31) and said suppression means (35) in accordance with either of said first comparison signal or said second comparison signal.

22. The method of claim 21 wherein said step of selectively controlling comprises the steps of: detecting the end of said initial adaptive period,

controlling at least one of said filter (31) and suppression means (35) in accordance with said first comparison signal only during said initial adaptive period, and

controlling at least one of said filter (31) and suppression means (35) in accordance with said second comparison signal only after the end of said initial adaptive period.

23. The method of claim 22 wherein said step of detecting the end of said initial period comprises comparing said composite signal to said intermediate signal.

**Revendications**

1. Dans un circuit d'annulation d'écho possédant une ligne réceptrice pour fournir un signal d'abonné éloigné ($R_o$) reçu d'un abonné éloigné; une ligne de transmission à laquelle sont appliqués un signal d'abonné proche d'un abonné proche et un signal d'écho pour fournir un signal composite ($S_i$); un filtre (31) présentant un processus d'adaptation avec des états opérant et inopérant pour recevoir le signal d'abonné éloigné ($R_o$) à une entrée de filtre et produire un signal qui correspond à une estimation du signal d'écho, ce signal estimé étant produit après une période adaptative initiale; un dispositif de soustraction (33) pour déduire le signal estimé du signal composite ($S_i$) afin de produire un signal intermédiaire ($S_o$) le long de la ligne de transmission; un dispositif de suppression de signal (35) présentant des états opérant et inopérant pour recevoir le signal intermédiaire ($S_o$) et pour produire un signal transmis; le procédé qui consiste à rendre sélectivement opérants et inopérants le processus d'adaptation et le dispositif de suppression (35) en engendrant un premier signal quantitatif lorsqu'une première relation existe entre le signal d'abonné éloigne ($R_o$) et le signal composite ($S_i$), caractérisé par le fait qu'il comprend en outre les étapes consistant à:

(a) engendrer un second signal lorsqu'une seconde relation quantitative existe entre le signal d'abonné éloigné ($R_o$) et le signal intermédiaire ($S_o$);

(b) engendrer un troisième signal lorsqu'une troisième relation quantitative existe entre le signal composite ($S_i$) et le signal intermédiaire ($S_o$); et

(c) rendre sélectivement inopérants et opérants le processus d'adaptation du filtre et le dispositif de suppression (35) suivant des combinaisons prédéterminées des premier, second et troisième signaux.

2. Le procédé de la revendication 1 où:

(a) le premier signal est engendré seulement lorsque le rapport entre le signal d'abonné éloigné ($R_o$) et le signal composite ($S_i$) est plus grand qu'un premier rapport prédéterminé;

(b) le second signal est engendré seulement lorsque le rapport entre le signal d'abonné éloigné ($R_o$) et le signal intermédiaire ($S_o$) est plus grand qu'un second rapport prédéterminé;

(c) le troisième signal est engendré seulement lorsque le rapport entre le signal composite ($S_i$) et le signal intermédiaire ($S_o$) est plus grand qu'un troisième rapport prédéterminé; et

(d) les second et troisième rapports prédéterminés étant plus grands que le premier rapport prédéterminé.

3. Le procédé de la revendication 2 où le processus d'adaptation et le dispositif de suppression (35) sont rendus opérants lorsque le premier signal est engendré, tandis que les second et troisième signaux ne sont pas engendrés (condition A).

4. Le procédé de la revendication 2 où le processus d'adaptation et le dispositif de suppression (35) sont rendus opérants lorsque les premier, second et troisième signaux sont tous engendrés (condition B).

5. Le procédé de la revendication 2 où le processus d'adaptation et le dispositif de suppression (35) sont rendus inopérants lorsqu'aucun des premier, second et troisième signaux n'est engendré (condition C).

6. Le procédé de la revendication 2 où le processus d'adaptation et le dispositif de suppression (35) sont rendus inopérants lorsque souls les premier et second signaux sont engendrés (condition D).

7. Le procédé de la revendication 2 où le processus d'adaptation est rendu inopérant et le dispositif de suppression (35) est rendu opérant lorsque seul le troisième signal est engendré (condition E).

8. Le procédé de la revendication 2 où le processus d'adaptation est rendu opérant et le dispositif de suppression (35) est rendu inopérant lorsque seuls les second et troisième signaux sont engendrés (condition F).

9. Le procédé de la revendication 2 où le troisième rapport prédéterminé est plus grand que le second rapport prédéterminé.

10. Un circuit d'annulation d'écho possédant une ligne réceptrice pour fournir un signal d'abonné éloigne ($R_o$) reçu d'un abonné éloigné; une ligne de transmission à laquelle sont appliqués un signal d'abonné proche d'un abonné proche et un signal d'écho pour fournir un signal composite ($S_i$); un filtre (31) pour recevoir le signal d'abonné éloigné ($R_o$) à une entrée de filtre et produire un signal qui correspond à une estimation du signal d'écho, ce signal estimé étant produit après une période adaptative initiale; un dispositif de soustraction (33) pour déduire le signal estimé du signal composite ($S_i$) afin de produire un signal intermédiaire ($S_o$) le long de la ligne de transmission; un dispositif de suppression de signal (35)

10

pour recevoir le signal intermédiaire ($S_o$) et pour produire un signal transmis; un premier détecteur (36) recevant le signal d'abonné éloigné ($R_o$) et le signal composite ($S_i$) et délivrant un premier signal de sortie lorsqu'une première relation quantitative prédéterminée existe entre le signal d'abonné éloigné ($R_o$) et le signal composite ($S_i$), ce circuit d'annulation d'écho étant caractérisé par le fait qu'il comprend en outre un second détecteur (38) recevant le signal d'abonné éloigné ($R_o$) et le signal intermédiaire ($S_o$) et délivrant un second signal de sortie lorsqu'une seconde relation quantitative prédéterminée existe entre le signal d'abonné éloigné ($R_o$) et le signal intermédiaire ($S_o$); un troisième détecteur (40) recevant le signal composite ($S_i$) et le signal intermédiaire ($S_o$) et délivrant un troisième signal de sortie lorsqu'une troisième relation quantitative prédéterminée existe entre le signal composite ($S_i$) et le signal intermédiaire ($S_o$); et un dispositif logique (44) recevant des signaux de sortie de chacun des premier, second et troisième détecteurs (36; 38; 40), où le dispositif logique (44) rend sélectivement opérants et inopérants ledit dispositif de filtrage (31) et le dispositif de suppression (35) sous la commande des premier, second et troisième signaux de sortie des détecteurs.

11. Le circuit d'annulation d'écho de la revendication 10 où le dispositif logique (44) rend le dispositif de suppression (35) opérant lorsqu'une pause dans le signal reçu se produit simultanément avec une absence du signal d'abonné proche.

12. Le circuit d'annulation d'écho de la revendication 10 où le dispositif de filtrage (31) comprend un filtre adaptatif et où la commande de celui-ci par le dispositif logique (44) permet sélectivement, soit l'adaptation du filtre pour la production d'une version mise à jour du signal d'écho estimé, soit le congélation de ce filtre adaptatif par maintenir les caractéristiques de ce filtre constantes.

13. Le circuit d'annulation d'écho de la revendication 10 ou 12, où le dispositif de suppression de signal (35) comporte un écréteur de central et où la commande de celui-ci par le dispositif logique (44) produit sélectivement, soit la mise en fonctionnement de cet écréteur, soi l'arrêt de cet écréteur.

14. Le circuit d'annulation d'écho de la revendication 10 où le dispositif logique (44) rend le dispositif de filtrage (31) et le dispositif de suppression (35) inopérants lorsque l'abonné proche parle mais le signal d'abonné proche est de plus faible amplitude que le signal d'écho.

15. Un circuit d'annulation d'écho possédant une ligne réceptrice pour recevoir un signal d'abonné éloigné ($R_o$) reçu d'un abonné éloigné, une ligne de transmission à laquelle sont appliqués un signal d'abonné proche d'un abonné proche et un signal d'écho pour fournir un signal composite ($S_i$), un filtre (31) ayant une entrée de filtre pour recevoir le signal d'abonné éloigné ($R_o$) et présentant un processus d'adaptation rendu sélectivement opérant et inopérant, pour produire un signal qui correspond à une estimation du signal d'écho, le signal estimé étant produit après une période adaptative initiale, un dispositif de soustraction (33) pour déduire le signal estimé du signal composite ($S_i$) afin de produire un signal intermédiaire ($S_o$) le long de la ligne de transmission, un dispositif de suppression de signal (35) pouvant être amené sélective ment à un état opérant et à une état inopérant, pour recevoir le signal intermédiaire ($S_o$) et pour produire un signal transmis, un premier dispositif de détection de parole double (36) pour engendrer à sa sortie un premier signal de commande lorsqu'une première relation quantitative existe entre le signal d'abonné éloigné et le signal d'abonné proche; ce circuit d'annulation d'écho étant caractérisé par:
un premier dispositif (46) pour engendrer un signal de sortie indiquant si oui ou non la période adaptative initiale est terminée;
un second dispositif de détection de parole double (38) pour engendrer à sa sortie un second signal de commande lorsqu'une seconde relation quantitative existe entre le signal intermédiaire ($S_o$) et le signal d'abonné éloigné ($R_o$); et
un dispositif de commande (44) sensible au signal de sortie dudit premier dispositif et auxdits premier et second signaux de commande pour rendre opérants et inopérants le dispositif de suppression de signal (35) et le dispositif de filtrage (31) suivant le premier signal de commande au cours de la période adaptative initiale du dispositif de filtrage (31) et pour rendre opérants et inopérants le dispositif de suppression de signal (35) et le dispositif de filtrage (31) suivant le second signal de commande après cette période adaptative initiale.

16. Un circuit d'annulation d'écho possédant une ligne réceptrice pour fournir un signal d'abonné éloigné ($R_o$) reçu d'un abonné éloigné; une ligne de transmission à laquelle sont appliqués un signal d'abonné proche d'un abonné proche et un signal d'écho pour fournir un signal composite ($S_i$); un filtre (31) pour recevoir ce signal d'abonné éloigné ($R_o$) à une entrée de filtre et produire un signal qui correspond à une estimation du signal d'écho, ce signal estimé étant produit après une période adaptative initiale; un dispositif de soustraction (33) pour déduire le signal estimé du signal composite ($S_i$) afin de produire un signal intermédiaire ($S_o$) le long de la ligne de transmission; un dispositif de suppression de signal (35) pour recevoir ce signal intermédiaire ($S_o$) et pour produire un signal transmis; un premier détecteur (36) pour engendrer un premier signal de détection en réponse à l'existence d'une première relation quantitative entre le signal d'abonné éloigné et le signal d'abonné proche; et un premier dispositif (44) pour rendre opérant et inopérant au moins le filtre (31) ou le dispositif de suppression de signal (35) en réponse au premier signal de détection; ce circuit d'annulation d'écho étant caractérisé par:
un dispositif (40) pour déterminer la fin de la période adaptative initiale; et
un second détecteur (38) pour engendrer un second signal de détection en réponse à l'existence d'une seconde relation quantitative entre le signal intermédiaire ($S_o$) et le signal d'abonné éloigné ($R_o$), le premier dispositif (44) rendant inopérant l'un des deux éléments que sont le filtre (31) et le dispositif de suppression

# 0 053 202

(35), en réponse au second signal de détection, seulement après que la fin de la période adaptative initiale a été déterminée.

17. Le circuit d'annulation d'écho de la revendication 16, comprenant en outre un troisième détecteur (40) pour engendrer un troisième signal de détection indiquant la fin de la période adaptative initiale.

18. Le circuit d'annulation d'écho de la revendication 16 où le troisième détecteur (40) engendre le troisième signal de détection en réponse à l'existence d'une troisième relation quantitative entre le signal composite ($S_l$) et le signal intermédiaire ($S_o$).

19. Le circuit d'annulation d'écho de la revendication 18 où au moins l'un des deux éléments que sont le filtre (31) et le dispositif de suppression de signal (35) est rendu opérant ou inopérant, suivant le second signal de détection, seulement pendant la production du troisième signal de détection.

20. Le circuit d'annulation d'écho de la revendication 16 où le premier dispositif (44) rend le filtre (31) opérant lorsque le premier détecteur (36) indique que le rapport entre le signal d'abonné éloigné ($R_o$) et le signal composite ($S_l$) est plus grand qu'un premier rapport prédéterminé et lorsque le second détecteur (38) indique que le rapport entre le signal d'abonné éloigné ($R_o$) et le signal intermédiaire ($S_o$) est inférieur à un second rapport prédéterminé.

21. Dans un circuit d'annulation d'écho possédant une ligne réceptrice pour fournir un signal d'abonné éloigné ($R_o$) reçu d'un abonné éloigné, une ligne de transmission à laquelle sont appliqués un signal d'abonné proche d'un abonné proche et un signal d'écho pour fournir un signal composite ($S_l$), un filtre (31) pour recevoir le signal d'abonné éloigné ($R_o$) à une entrée de filtre et produire un signal qui correspond à une estimation du signal d'écho, ce signal estimé étant produit après une période adaptative initiale, un dispositif de soustraction (33) pour déduire le signal estimé du signal composite ($S_l$) afin de produire un signal intermédiaire ($S_o$) le long de la ligne de transmission, de même qu'un dispositif de suppression de signal (35) pour recevoir le signal intermédiaire ($S_o$) et pour produire un signal transmis, un procédé pour commander ce circuit d'annulation d'écho, ce procédé étant du type comprenant les étapes qui consistent à engendrer un premier signal de comparaison conformément à la comparaison du signal composite ($S_l$) avec le signal d'abonné éloigné ($R_o$), ce procédé étant caractérisé par le fait qu'il comprend en outre:

la production d'un second signal de comparaison conformément à la comparaison du signal intermédiaire ($S_o$) avec le signal d'abonné éloigné ($R_o$); et

la commande sélective d'au moins l'un des deux éléments que sont le filtre (31) et le dispositif de suppression (35) suivant l'un ou l'autre de ces premier et second signaux de comparaison.

22. Le procédé de la revendication 21 où l'étape de commande sélective consiste à:

détecter la fin de la période adaptative initiale,

commander au moins l'un des deux éléments qu sont le filtre (31) et le dispositif de suppression, suivant le premier signal de comparaison, seulement pendant la période adaptative initiale, et

commander au moins l'un des deux éléments que sont le filtre (31) et le dispositif de suppression (35), suivant le second signal de comparison, seulement après la fin de la période adaptative initiale.

23. Le procédé de la revendication 22 où la détection de la fin de la période initiale comprend la comparaison du signal composite avec le signal intermédiaire.

**Patentansprüche**

1. Echokompensationsstufe mit einer Empfangsleitung, um ein Signal eines fernen Teilnehmers ($R_o$) zu liefern, das von einem fernen Teilnehmer empfangen wird; mit einer Sendeleitung, die ein Signal eines nahen Teilnehmers besitzt, das von einem nahen Teilnehmer stammt, und an der eine Echosignal anliegt, um ein zusammengesetztes Signal ($S_l$) zu liefern; mit einer Filterstufe (31), die ein Anpassungsverfahren besitzt, das über einen Betriebszustand und einen Außerbetriebzustand verfügt, um das Signal des fernen Teilnehmers ($R_o$) an einem Filtereingang zu empfangen und eine Signal zu erzeugen, das das Echosignal abschätzt, wobei das abgeschätzte Signal nach einem Anfangsanpassungsintervall erzeugt wird; mit einer Subtraktionsstufe (33), um das abgeschätzte Signal zom zusammengesetzten Signal ($S_l$) abzuziehen, um auf der Sendeleitung ein Zwischensignal ($S_o$) zu erzeugen; mit einer Signalunderdrückungsstufe (35), die einen Betriebszustand und einen Außerbetriebzustand besitzt, um das Zwischensignal ($S_o$) zu empfangen und ein ausgesandtes Signal zu erzeugen; mit einem Verfahren, um das Anpassungsverfahren und die Unterdrückungsstufe (35) wahlweise dadurch in Betrieb und außer Betrieb zu setzen, daß ein erstes quantitatives Signal erzeugt wird, wenn zwischen dem Signal des fernen Teilnehmers ($R_o$) und dem zusammengesetzten Signal ($S_l$) ein erstes Verhältnis besteht, dadurch gekennzeichnet, daß das Verfahren weiters folgende Schritte besitzt: Erzeugung eines zweiten Signals, wenn zwischen dem Signal des fernen Teilnehmers ($R_o$) und dem Zwischensignal ($S_o$) ein zweites quantitatives Verhältnis besteht; Erzeugung eines dritten Signals, wenn zwischen dem zusammengesetzten Signal ($S_l$) und dem Zwischensignal ($S_o$) ein drittes quantitatives Verhältnis besteht; und wahlweises in Betrieb und außer Betrieb setzen des Filter anpassungsverfahrens und der Unterdrückungsstufe (35) in Übereinstimmung mit vorgegebenen Kombinationen des ersten, zweiten und dritten Signals.

2. Verfahren gemäß Anspruch 1, dadurch gekennzeichnet, daß das erste Signal nur dann erzeugt wird, wenn das Verhältnis des Signals des fernen Teilnehmers ($R_o$) zum zusammengesetzten Signal ($S_l$) größer als ein erstes vorgegebenes Verhältnis ist; das zweite Signal nur dann erzeugt wird, wenn das Verhältnis des Signals des fernen Teilnehmers ($R_o$) zum Zwischensignal ($S_o$) größer als ein zweites vorgegebenes

12

Verhältnis ist; das dritte Signal nur dann erzeugt wird, wenn das Verhältnis des zusammengesetzten Signals ($S_i$) zum Zwischensignal ($S_o$) größer als ein drittes vorgegebenes Verhältnis ist; und das zweite und dritte vorgegebene Verhältnis größer als das erste vorgegebene Verhältnis sind.

3. Verfahren gemäß Anspruch 2, dadurch gekennzeichnet, daß das Anpassungsverfahren und die Unterdrückungsstufe (35) in Betrieb gesetzt werden, wenn das erste Signal erzeugt wird, währen das zweite und dritte Signal nicht erzeugt werden (Zustand A).

4. Verfahren gemäß Anspruch 2, dadurch gekennzeichnet, daß das Anpassungsverfahren und die Unterdrückungsstufe (35) in Betrieb gesetzt werden, wenn sowohl das erste, das zweite als auch das dritte Signal erzeugt werden (Zustand B).

5. Verfahren gemäß Anspruch 2, dadurch gekennzeichnet, daß das Anpassungsverfahren und die Unterdrückungsstufe (35) außer Betrieb gesetzt werden, wenn weder das erste, das zweite noch das dritte Signal erzeugt werden (Zustand C).

6. Verfahren gemäß Anspruch 2, dadurch gekennzeichnet, daß das Anpassungsverfahren und die Unterdrückungsstufe (35) außer Betrieb gesetzt werden, wenn nur das erste und zweite Signal erzeugt werden (Zustand D).

7. Verfahren gemäß Anspruch 2, dadurch gekennzeichnet, daß das Anpassungsverfahren außer Betrieb gesetzt und die Unterdrückungsstufe (35) in Betrieb gesetzt werden, wenn wenn nur das dritte Signal erzeugt wird (Zustand E).

8. Verfahren gemäß Anspruch 2, dadurch gekennzeichnet, daß das Anpassungsverfahren in Betrieb und die Unterdrückungsstufe (35) außer Betrieb gesetzt werden, wenn nur das zweite und dritte Signal erzeugt werden (Zustand F).

9. Verfahren gemäß Anspruch 2, dadurch gekennzeichnet, daß das dritte vorgegebene Verhältnis größer als das zweite vorgegebene Verhältnis ist.

10. Echokompensationsstufe mit einer Empfangsleitung, um ein Signal eines fernen Teilnehmers ($R_o$) zu liefern, das von einem fernen Teilnehmer empfangen wird; mit einer Sendeleitung, die ein Signal eines nahen Teilnehmers besitzt, das von einem nahen Teilnehmer stammt, und an der ein Echosignal anliegt, um ein zusammengesetztes Signal ($S_i$) zu liefern; mit einer Filterstufe (31), um das Signal des fernen Teil nehmers ($R_o$) an einem Filtereingang zum empfangen und ein signal zu erzeugen, das das Echosignal abschätzt, wobei das abgeschätzte Signal nach einem Anfangsanpassungsintervall erzeugt wird; mit einer Subtraktionsstufe (33), um das abgeschätzte Signal vom zusammengesetzten Signal ($S_i$) abzuziehen, um auf der Sendeleitung ein Zwischensignal ($S_o$) zu erzeugen; mit einer Signalunterdrückungsstufe (35), um das Zwischensignal ($S_o$) zum empfangen und ein ausgesandtes Signal zu erzeugen; mit einem ersten Detektor (36), der das Signal des fernen Teilnehmers ($R_o$) sowie das zusammengesetzte Signal ($S_i$) empfängt und ein erstes Ausgangssignal liefert, wenn zwischen dem Signal des fernen Teilnehmers ($R_o$) und dem zusammengesetzten Signal ($S_i$) ein erstes vorgegebenes quantitatives Verhältnis besteht, wobei die Echokompensationsstufe dadurch gekennzeichnet ist, daß sie weiters einen zweiten Detektor (38) enthält, der das Signal des fernen Teilnehmers ($R_o$) sowie das Zwischensignal ($S_o$) empfängt und ein zweites Ausgangssignal liefert, wenn zwischen dem Signal des fernen Teilnehmers ($R_o$) und dem Zwischen signal ($S_o$) ein zweites vorgegebenes quantitatives Verhältnis besteht; einen dritten detektor (40) enthält, der das zusammengesetzte Signal ($S_i$) sowie das Zwischensignal ($S_o$) empfängt und ein drittes Ausgangssignal liefert, wenn zwischen dem zusammengesetzten Signal ($S_i$) und dem Zwischensignal ($S_o$) ein drittes vorgegebenes quantitatives Verhältnis besteht; sowie eine Logikstufe (44) enthält, die die Ausgangssignale der drei Detektoren (36; 38; 40) empfängt, wobei die Logikstufe (44) die Filterstufe (31) und die Unterdrückungsstufe (35) unter der Steuerung der drei Detektorausgangssignale wahlweise in Betrieb und außer Betrieb setzt.

11. Echokompensationsstufe gemäß Anspruch 10, dadurch gekennzeichnet, daß die Logikstufe (44) die Unterdrückungsstufe (35) in Betrieb setzt, wenn gleichzeitig im empfangenen Signal eine Pause auftritt und das Signal des nahen Teilnehmers fehlt.

12. Echokompensationsstufe gemäß Anspruch 10, dadurch gekennzeichnet, daß die Filterstufe (31) ein Anpassungsfilter enthält, wobei dessen Steuerung durch die Logikstufe (44) so erfolgt daß wahlweise das Anpassungsfilter einerseits eine Anpassung vornehmen kann, um eine Version des Letztstands für das abgeschätzte Echosignal zu erzeugen, und das Anpassungsfilter andererseits eingefroren wird, um die Kennlinien des Anpassungsfilters konstant zu halten.

13. Echokompensationsstufe gemäß Anspruch 10 der 12, dadurch gekennzeichnet, daß die Signalunterdrückungsstufe (35) einen Mittenschwellwertbegrenzer enthält, wobei dessen Steuerung durch die Logikstufe (44) so erfolgt, daß der Schwellwertbegrenzer wahlweise einerseits eingeschaltet und andererseits ausgeschaltet wird.

14. Echokompensationsstufe gemäß Anspruch 10, dadurch gekennzeichnet, daß die Logikstufe (44) die Filterstufe (31) und die Unterdrückungsstufe (35) außer Betrieb setzt, wenn der nahe Teilnehmer spricht, wobei das Signal des nahen Teilnehmers jedoch eine kleinere Amplitude als das Echosignal besitzt.

15. Echokompensationsstufe mit einer Empfangsleitung, um ein Signal eines fernen Teilnehmers ($R_o$) zu empfangen, das von einem fernen Teilnehmer empfangen wird; mit einer Sendeleitung, die ein Signal eines nahen Teilnehmers besitzt, das von einem nahen Teilnehmer stammt, und an der ein Echosignal anliegt, um ein zusammengesetztes Signal ($S_i$) zu liefern; mit einer Filterstufe (31), die einen Filtereingang besitzt, um das Signal des fernen Teilnehmers ($R_o$) zu empfangen, und ein Anpassungsverfahren besitzt,

# 0 053 202

das wahlweise in Betrieb und außer Betrieb gesetzt werden kann, um ein Signal zu erzeugen, das das Echo signal abschätzt, wobei das abgeschätzte Signal nach einem Anfangsanpassungsintervall erzeugt wird; mit einer Subtraktionsstufe (33), um das abgeschätzte Signal vom zusammengesetzten Signal ($S_i$) abzuziehen, um auf der Sendeleitung ein Zwischensignal ($S_o$) zu erzeugen; mit einer Signalunterdrückungsstufe (35), die einen Betriebszustand und einen Außerbetriebzustand besitzt, um das Zwischensignal ($S_o$) zu empfangen und ein ausgesandtes Signal zu erzeugen; mit einem ersten Doppelsprechdetektor (36), um ein erstes Steuerausgangssignal zu erzeugen, wenn zwischen dem Signal des fernen und des nahen Teil nehmers ein erstes quantitatives Verhältnis besteht; wobei die Echokompensationsstufe gekennzeichnet ist durch eine erste Stufe (46), um ein Ausgangssignal zu erzeugen, das anzeigt, ob das Anfangsanpassungsintervall beendet ist oder nicht; durch einen zweiten Doppelsprechdetektor (38), um ein zweites Steuerausgangs signal zu erzeugen, wenn zwischen dem Zwischensignal ($S_o$) und dem Signal des fernen Teilnehmers ($R_o$) ein zweites quantitatives Verhältnis besteht; sowie durch eine Steuerstufe (44), die auf das Ausgangssignal der ersten Stufe sowie das erste und zweite Steuerausgangssignal anspricht, um die Inbetriebsetzung und die Außerbetriebsetzung der Signalunterdrückungsstufe (35) sowie der Filterstufe (31) während des Anfangsanpassungsintervalls der Filterstufe (31) in Übereinstimmung mit dem ersten Steuersignal zu steuern, und die Inbetriebsetzung sowie die Außerbetriebsetzung der Signalunterdrückungsstufe (35) sowie der Filterstufe (31) nach dem Anfangsanpassungsintervall in Übereinstimmung mit dem zweiten Steuerausgangssignal zu steuern.

16. Echokompensationsstufe mit einer Empfangsleitung, um ein Signal eines fernen Teilnehmers ($R_o$) zu liefern, das von einem fernen Teilnehmers empfangen wird; mit einer Sendeleitung, die ein Signal eines nahen Teilnehmers besitzt, das von einem nahen Teilnehmer stammt, und an der ein Echosignal anliegt, um ein zusammengesetztes Signal ($S_i$) zu liefern; mit einer Filterstufe (31), um das Signal des fernen Teil nehmers ($R_o$) an einem Filtereingang zu empfangen und ein Signal zu erzeugen, das das Echosignal abschätzt, wobei das abgeschätzte signal nach einem Anfangsanpassungsintervall erzeugt wird; mit einer Subtraktionsstufe (33), um das abgeschätzte Signal vom zusammengesetzten Signal ($S_i$) abzuziehen, um auf der Sendeleitung ein Zwischensignal ($S_o$) zu erzeugen; mit einer Signalunterdrückungsstufe (35), um das Zwischensignal ($S_o$) zu empfangen und ein ausgesandtes Signal zu erzeugen; mit einem ersten Detektor (36), um in Abhängigkeit vom Auftreten eines ersten quantitativen Verhältnisses zwischen dem Signal des fernen und des nahen Teilnehmers ein erstes Abtastsignal zu erzeugen; sowie mit einer ersten Stufe (44), um zumindest die Filterstufe (31) oder die Signalunterdrückungsstufe (35) in Abhängigkeit vom ersten Abtastsignal in Betrieb und außer Betrieb zu setzen; wobei die Echokompensationsstufe gekennzeichnet ist durch eine Stufe (40), um das Ende des Anfangsanpassungsintervalls zu bestimmen; sowie durch einen zweiten Detektor (38), um in Abhängigkeit vom Auftreten eines zweiten quantitativen Ver- hältnisses zwischen dem Zwischensignal ($S_o$) und dem Signal des fernen Teilnehmers ($R_o$) ein zweites Abtastsignal zu erzeugen, wobei die erste Stufe (44) zumindest die Filterstufe (31) oder die Signalunter drückungsstufe (35) in Abhängigkeit vom zweiten Abtastsignal nur außer Betrieb setzt, nachdem das Ende des Anfangsanpassungsintervalls bestimmt wurde.

17. Echokompensationsstufe gemäß Anspruch 16, dadurch gekennzeichnet, daß sie weiters einen dritten Detektor (40) enthält, um ein drittes Abtastsignal zu erzeugen, das das Ende des Anfangsanpassungsintervalls anzeigt.

18. Echokompensationsstufe gemäß Anspruch 17, dadurch gekennzeichnet, daß der dritte Detektor (40) das dritte Abtastsignal in Abhängigkeit vom Auftreten eines dritten quantitativen Verhältnisses zwischen dem zusammengesetzten Signal ($S_i$) und dem Zwischensignal ($S_o$) erzeugt.

19. Echokompensationsstufe gemäß Anspruch 18, dadurch gekennzeichnet, daß zumindest die Filter stufe (31) oder die Signalunterdrückungsstufe (35) in Übereinstimmung mit dem zweiten Abtastsignal nur dann in Betrieb oder außer Betrieb ge setzt wird, wenn das dritte Abtastsignal erzeugt wird.

20. Echokompensationsstufe gemäß Anspruch 16, dadurch gekennzeichnet, daß die erste Stufe (44) die Filterstufe (31) in Betrieb setzt, wenn der erste Detektor (36) anzeigt, daß das Verhältnis des Signals des fernen Teilnehmers ($R_o$) zum zusammengesetzten Signal ($S_i$) größer als ein erstes vorgegebenes Verhältnis ist, und der zweite Detektor (38) anzeigt, daß das Verhältnis des Signals des fernen Teilnehmers ($R_o$) zum Zwischensignal ($S_o$) kleiner als ein zweites vorgegebens Verhältnis ist.

21. Echokompensationsstufe mit einer Empfangsleitung, um ein Signal eines fernen Teilnehmers ($R_o$) zu liefern, das von einem fernen Teilnehmer empfangen wird; mit einer Sendeleitung, die ein Signal eines nahen Teilnehmers besitzt, das von einem nahen Teilnehmer stammt, und an der ein Echosignal anliegt, um ein zusammengesetztes Signal ($S_i$) zum liefern; mit einer Filterstufe (31), um das Signal des fernen Teil nehmers ($R_o$) an einem Filtereingang zu empfangen und ein Signal zu erzeugen, das das Echosignal abschätzt, wobei das abgeschätzte Signal nach einem Anfangsanpassungseintervall erzeugt wird; mit einer Subtraktionsstufe (33), um das abgeschätzte Signal vom zusammengesetzten Signal ($S_i$) abzuziehen, um auf der Sendeleitung ein Zwischensignal ($S_o$) zu erzeugen; sowie mit einer Signalunterdrückungsstufe (35), um das Zwischensignal ($S_o$) zu empfangen und eine ausgesandtes Signal zu erzeugen; mit einem Verfahren, um die Echoanpassungsstufe zu steuern, wobei das Verfahren folgende Schritte enthält: Erzeugung eines ersten Vergleichssignals in Übereinstimmung mit dem Vergliech zwischen dem zusammengesetzten Signal ($S_i$) und dem Signal des fernen Teilnehmers ($R_o$), dadurch gekennzeichnet, daß das Signal weiters folgende Schritte enthält: Erzeugung eines zweiten Vergleichssignals in Übereinstimmung mit dem Vergleich zwischen dem Zwischensignal ($S_o$) und dem Signal des fernen Teilnehmers

($R_o$); und wahlweise Steuerung zumindest der Filterstufe (31) oder der Unterdrückungsstufe (35) in Übereinstimmung entweder mit dem ersten oder dem zweiten Vergleichssignal.

22. Verfahren gemäß Anspruch 21, dadurch gekennzeichnet, daß der Schritt für die wahlweise Steuerung folgende Schritte enthält: Abtastung des Endes des Anfangsanpassungsintervalls; Steuerung zumindest der Filterstufe (31) oder der Unterdrückungsstufe (35) in Übereinstimmung mit dem ersten Vergleichssignal nur während des Anfangsanpassungsintervalls; und Steuerung zumindest der Filterstufe (31) oder der Unterdrückungsstufe (35) in Übereinstimmung mit dem zweiten Vergleichssignal nur nach dem Ende des Anfangsanpassungsintervalls.

23. Verfahren gemäß Anspruch 22, dadurch gekennzeichnet, daß der Schritt zum Abtasten des Endes des Anfangsanpassungsintervalls einen Vergleich zwischen dem zusammengesetzten Signal und dem Zwischensignal enthält.

## FIG 1

PRIOR ART

## FIG 2

# FIG 3